# EUROPEAN PATENT APPLICATION

(11) **EP 4 362 159 A1**
(43) Date of publication of application: **01.05.2024**
(21) Application number: 22827963.4
(22) Date of filing: 14.03.2022
(51) Int. Cl.: H01M 10/0562, H01M 10/0585

(54) **METHOD FOR MANUFACTURING BATTERY**

(30) Priority: 21.06.2021 JP 2021102254
(71) Applicant: Panasonic Intellectual Property Management Co., Ltd., Kadoma-shi, Osaka 571-0057 (JP)
(72) Inventor: HIRANO, Koichi, Tokyo 103-0022 (JP); MORIOKA, Kazuhiro, Tokyo 103-0022 (JP); KAWASE, Akira, Tokyo 103-0022 (JP)
(74) Representative: Grünecker Patent- und Rechtsanwälte PartG mbB
(86) International application number: PCT/JP2022/011262
(87) International publication number: WO 2022/270042

(57) **Abstract**

A method for manufacturing a battery includes: a first cutting step of cutting a laminate at a first cutting position to form a first cut surface, the laminate including at least one battery cell having a positive electrode layer, a negative electrode layer, and a solid electrolyte layer located between the positive electrode layer and the negative electrode layer; and a second cutting step of cutting the laminate cut in the first cutting step at a second cutting position inside the first cutting position to form a second cut surface. In the second cutting step, Rz₁ < W < 5Rz₁ is satisfied, where W denotes a distance between the first cut surface and the second cut surface to be formed and Rz₁ denotes a surface roughness of the first cut surface.

## Description

### Technical Field

The present disclosure relates to a method for manufacturing battery.

### Background Art

Heretofore, there has been known a battery in which current collectors and active material layers are laminated.

For example, PTL 1 discloses a battery laminate formed by laminating unit batteries each including a positive current collector layer, a positive electrode active material layer, a solid electrolyte layer, a negative electrode active material layer, and a negative current collector layer laminated in this order.

### Citation List

### Patent Literature

PTL 1: Japanese Unexamined Patent Application Publication No. 2020-13729
PTL 2: Japanese Unexamined Patent Application Publication No. 2015-76315

### Summary of Invention

### Technical Problem

In order to increase the capacity density of a battery, it is necessary to increase the effective volume contributing to power generation. For this purpose, it is effective to cut a battery cell to remove portions thereof not contributing to power generation. However, when a battery cell is cut, there is a problem that burrs and a shear drop (so-called rollover) of battery constituent elements are generated on the cut surface and are prone to shortcircuiting, thereby lowering the operational reliability of the battery. For example, PTL 2 discloses a method for manufacturing a battery including measuring a voltage after an edge portion of a battery cell is cut, and cutting the edge portion of the battery cell again in the case where the voltage gradually decreases. However, PTL 2 does not disclose a cutting method capable of inhibiting the generation of burrs and rollover on the cut surface.

The present disclosure intends to solve the above problem, and has an object to provide a method for manufacturing a battery capable of achieving both a high capacity density and high reliability of a battery.

### Solution to Problem

A method for manufacturing a battery according to one aspect of the present disclosure includes a first cutting step of cutting a laminate at a first cutting position to form a first cut surface, the laminate including at least one battery cell having a positive electrode layer, a negative electrode layer, and a solid electrolyte layer located between the positive electrode layer and the negative electrode layer; and a second cutting step of cutting the laminate cut in the first cutting step at a second cutting position inside the first cutting position to form a second cut surface, in which Rz₁ < W < 5Rz₁ is satisfied in the second cutting step, where W denotes a distance between the first cut surface and the second cut surface to be formed and Rz₁ denotes a surface roughness of the first cut surface.

### Advantageous Effects of Invention

According to the present disclosure, it is possible to achieve both a high capacity density and high reliability of a battery.

### Brief Description of Drawings

[Fig. 1A] Fig. 1A is a sectional view illustrating a sectional structure of a battery according to Embodiment 1.
[Fig. 1B] Fig. 1B is a top view of the battery according to Embodiment 1.
[Fig. 2A] Fig. 2A is a sectional view illustrating a sectional structure of a laminate according to Embodiment 1.
[Fig. 2B] Fig. 2B is a top view of the laminate according to Embodiment 1.
[Fig. 3] Fig. 3 is a sectional view for explaining a method for manufacturing a battery according to Embodiment 1.
[Fig. 4] Fig. 4 is a top view for explaining another example of a second direction in a second cutting step.
[Fig. 5] Fig. 5 is a sectional view illustrating a sectional structure of a laminate according to Embodiment 2.
[Fig. 6] Fig. 6 is a sectional view illustrating a sectional structure of another laminate according to Embodiment 2.
[Fig. 7] Fig. 7 is a sectional view for explaining a method for manufacturing a battery according to Embodiment 2.

### Description of Embodiments

### (Outline of Present Disclosure)

A method for manufacturing a battery according to one aspect of the present disclosure includes: a first cutting step of cutting a laminate at a first cutting position to form a first cut surface, the laminate including at least one battery cell having a positive electrode layer, a negative electrode layer, and a solid electrolyte layer located between the positive electrode layer and the negative electrode layer; and a second cutting step of cutting the laminate cut in the first cutting step at a second cutting position inside the first cutting position to form a second cut surface, in which Rz₁ < W < 5Rz₁ is satisfied in the second cutting step, where W denotes a distance between the first cut surface and the second cut surface to be formed and Rz₁ denotes a surface roughness of the first cut surface.

Thus, in the first cutting step and the second cutting step, removal of a portion of a battery not contributing to power generation and the like can be achieved by cutting the laminate, and accordingly the ratio of an effective volume that is a volume contributing to power generation to the battery can be enhanced. In addition, the cutting in the second cutting step under the condition satisfying Rz₁ < W < 5Rz₁ makes it possible to improve the flatness of the second cut surface, and to reduce the number and size of burrs and rollover of the constituent elements of the laminate generated on the second cut surface and thereby inhibit a short circuit from occurring between the positive electrode layer and the negative electrode layer. Therefore, the method for manufacturing a battery according to the present embodiment leads to achievement of a high capacity density and high reliability of a battery.

In addition, for example, the above W may be less than or equal to three times a thickness of the laminate.

This makes it possible to improve the flatness of the second cut surface and improve the quality of the second cut surface by reducing the generation of burrs and rollover.

Moreover, for example, the first cutting step and the second cutting step may be performed continuously as a series of steps.

This enables continuous cutting of the laminate without inserting another step, thereby improving the productivity.

Further, for example, when the position of the laminate is set as a reference, a first direction in which cutting of the laminate at the first cutting position proceeds may be different from a second direction in which cutting of the laminate at the second cutting position proceeds. For example, the second direction may be a direction perpendicular to the first direction.

In this case, since the laminate can be cut in different cutting directions in the first cutting step and the second cutting step, the laminate can be cut in directions adjusted depending on the quality of the cut surface, the ease of cutting, and the like.

Moreover, for example, the second direction may be a direction perpendicular to a laminating direction of the laminate.

In this case, even when burrs and the like are generated in the second cutting step, the burrs and the like are formed to extend orthogonally to the laminating direction of the laminate. For this reason, the occurrence of a short circuit is inhibited and accordingly the reliability of the battery thus manufactured can be improved.

Moreover, for example, the at least one battery cell may include multiple battery cells and the multiple battery cells may be laminated.

In this case, in the laminate in which the multiple battery cells are laminated, it is possible to inhibit short circuits between the positive electrode layer and the negative electrode layer from occurring between the multiple battery cells and in each battery cell, and also enhance the ratio of the effective volume to the battery. This enables a laminate-type high-capacity high-power battery to achieve both a high capacity density and high reliability.

Moreover, for example, the laminate may be cut by a shearing process in each of the first cutting step and the second cutting step.

In this case, the laminate can be cut only by shearing with a blade and the battery cell rarely deteriorates. Therefore, the productivity and the effective volume of the battery can be enhanced.

In addition, for example, the laminate may be cut with an ultrasonic cutter in the second cutting step.

In this case, the flatness of the second cut surface can be further enhanced.

Furthermore, for example, the surface roughness of the second cut surface may be less than or equal to a thickness of the solid electrolyte layer. In addition, for example, the second cut surface may be flat.

In this case, the reliability of the battery can be further enhanced. For example, if the surface roughness of the second cut surface is less than or equal to the thickness of the solid electrolyte layer, the occurrence of a short circuit can be effectively inhibited, because even if a protrusion is formed on one of the positive electrode layer and the negative electrode layer on the second cut surface, the protrusion does not reach the other electrode layer when deformation or the like occurs.

Hereinafter, embodiments of the present disclosure will be described with reference to the drawings.

Each of the embodiments to be described below presents a comprehensive or specific example. The numeric values, shapes, materials, constituent elements, layout positions and connection forms of the constituent elements, steps, the order of the steps, and so on described in the following embodiments are just examples and are not intended to limit the present disclosure. Among the constituent elements in the following embodiments, the constituent elements not described in the independent claim are described as optional constituent elements.

The drawings are schematic ones and are not necessarily illustrated exactly. Therefore, for example, the scales and the like are not always consistent among the drawings. Moreover, in the drawings, substantially the same constituent elements are denoted with the same reference signs and the repetitive description will be omitted or simplified.

In the present description, terms indicating relationships between elements such as parallel and perpendicular or orthogonal, terms indicating the shapes of elements such as a rectangle and a circle, and numerical ranges are not expressions specifying strict meanings only, but are expressions meaning substantially the equivalent ranges, for example, including a difference by about several percent.

In the present description and drawings, an x axis, a y axis, and a z axis represent three axes in a three-dimensional Cartesian coordinate system. When a shape in a plan view of a battery is a rectangle, the x axis coincides with a direction parallel to a first side of the rectangle, and the y axis coincides with a direction parallel to a second side orthogonal to the first side. The z axis coincides with a laminating direction of layers in a laminate and a battery.

In the present description, the "laminating direction" coincides with a direction normal to main surfaces of a current collector and an active material layer. In the present description, the "plan view" means a view seen from a direction perpendicular to the main surface of the battery or the laminate unless otherwise specified. However, an expression "a plan view of a certain surface" such as "a plan view of a cut surface" means a view of the "certain surface" seen from the front side.

In the present description, the terms "upper" and "lower" do not refer to an absolutely upper direction (vertically upper side) and an absolutely lower direction (vertically lower side) in a spatial recognition, but are used as terms specified according to a relative positional relationship based on a laminating order in a laminate structure. In addition, terms "above" and "below" are also applied to not only a case where two constituent elements are spaced from each other and another constituent element is present between the two constituent elements, but also a case where two constituent elements are in contact with each other by being closely attached to each other. In the following description, the negative side of the z axis is a "lower side" or "bottom side" and the positive side of the z axis is an "upper side" or "top side".

### (Embodiment 1)

### [Structure]

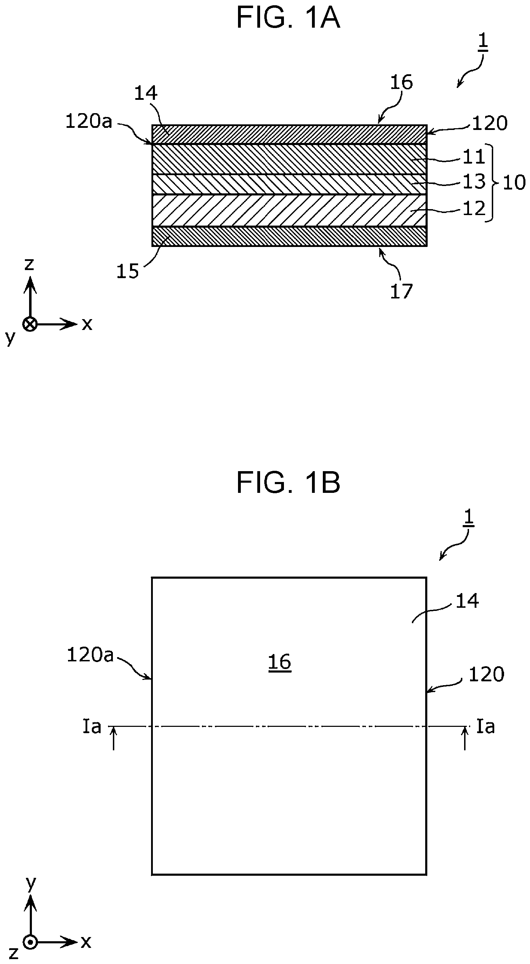

First, a structure of a battery according to Embodiment 1 will be described by using Figs. 1A and 1B.

Fig. 1A is a sectional view illustrating a sectional structure of a battery 1 according to the present embodiment. Fig. 1B is a top view of the battery 1 according to the present embodiment. Fig. 1A illustrates a section taken along a Ia-Ia line in Fig. 1B.

First, an outline of the battery 1 will be described.

As illustrated in Figs. 1A and 1B, the battery 1 according to the present embodiment includes a battery cell 10 having a positive electrode layer 11, a negative electrode layer 12, and a solid electrolyte layer 13 located between the positive electrode layer 11 and the negative electrode layer 12, and includes a positive current collector 14 and a negative current collector 15. The battery 1 is, for example, an all-solid-state battery.

The shape in the plan view of the battery 1 is a rectangle, for example. The shape of the battery 1 is, for example, a flat rectangular parallelepiped. The term flat herein means that the thickness (that is, the length in the z axis direction) is smaller than each side of the main surface (that is, the length in each of the x axis direction and the y direction) or the maximum width of the main surface. The shape in the plan view of the battery 1 may be another quadrangular shape such as a square, a parallelogram, or a rhombus or may be another polygonal shape such as a hexagon or an octagon. The shape of the battery 1 is, for example, the rectangular parallelepiped, but may be another shape such as a cube, a pyramidal frustum, or a polygonal column. In the present description, the sectional view such as Fig. 1A illustrates the thickness of each layer in an exaggerated manner in order to facilitate understanding of the layer structure of the battery 1.

In the plan view of the battery 1, the positive current collector 14, the positive electrode layer 11, the solid electrolyte layer 13, the negative electrode layer 12, and the negative current collector 15 have the same shape and the same size and their contours coincide with each other.

The battery 1 has parallel main surfaces 16 and 17 opposed to each other across the battery cell 10 and four side surfaces connecting the main surfaces 16 and 17. The main surface 16 is the uppermost surface of the battery 1. The main surface 17 is the lowermost surface of the battery 1.

For example, the four side surfaces extend perpendicularly from the respective sides of the main surface 17 to the main surface 16. The four side surfaces of the battery 1 are, for example, two pairs of side surfaces parallel to each other. Of the two pairs of the side surfaces, one pair of the side surfaces are second cut surfaces 120 and 120a formed in a second cutting step to be described later. At least one side surface of the battery 1 only has to be the second cut surface. Instead, all the side surfaces of the battery 1 may be the second cut surfaces from the viewpoint that the capacity density and reliability can be enhanced.

The battery cell 10 is located between the positive current collector 14 and the negative current collector 15. Although the battery 1 includes one battery cell 10 herein, the number of battery cells 10 is not limited to one but may be equal to or larger than two. For example, the battery according to the present embodiment may be a laminate-type battery in which multiple battery cells 10 are laminated with at least one of the positive current collector 14 and the negative current collector 15 interposed in between.

The battery 1 is manufactured by cutting an edge portion of a laminate 1a to be described later. A laminate structure of the battery 1 is the same as a laminate structure of the laminate 1a. Detailed description of each layer in the battery 1 will be provided later as description of the laminate 1a.

In the battery 1 according to the present embodiment, a tab or lead, which is an electrode taken out to the outside, may be connected to at least one of the positive current collector 14 and the negative current collector 15. Moreover, in order to keep the battery 1 airtight and protect the battery 1, the battery 1 may be laminated with an outer package, or the battery 1 may be resin-sealed. In addition, the second cut surfaces 120 and 120a may be at least partly covered with an insulating member in order to protect the cut surfaces. As the insulating material, a material having at least electrical insulation properties is used and a material also having impact resistance, heat resistance, flexibility and gas barrier properties may be used. As the insulating material, a polymer such, for example, as epoxy resin, acrylic resin, methacrylic resin, aramid resin, or polyimide resin, or an inorganic adhesive material may be used.

### [Method for manufacturing a battery]

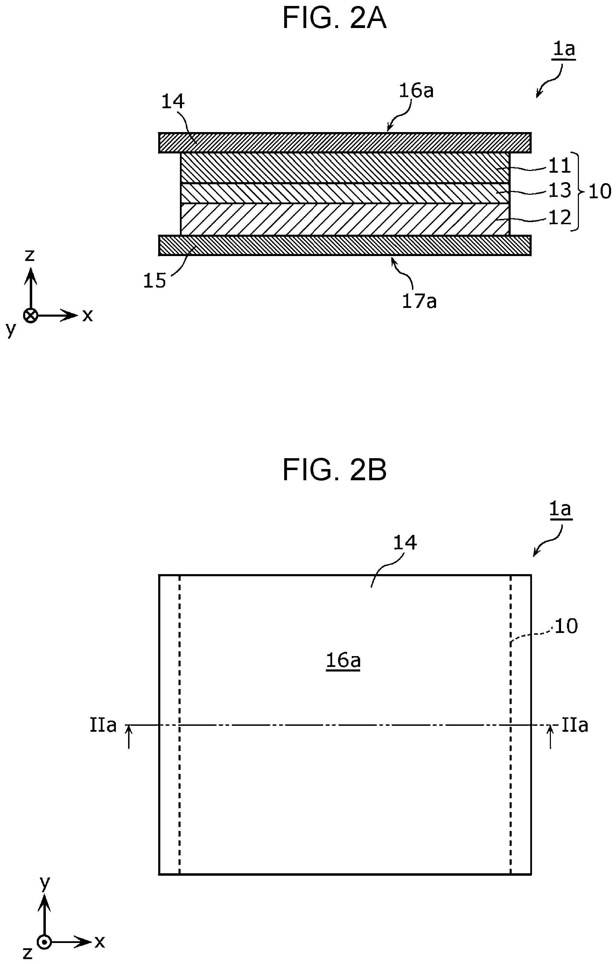

Next, a method of manufacturing the battery 1 according to the present embodiment will be described by using Figs. 2A, 2B, 3 and 4.

The method of manufacturing the battery 1 according to the present embodiment includes, for example, a laminate forming step, a first cutting step, and a second cutting step.

First, the laminate forming step will be described.

Fig. 2A is a sectional view illustrating a sectional structure of the laminate 1a according to the present embodiment. Fig. 2B is a top view of the laminate 1a according to the present embodiment. Fig. 2A illustrates a section taken along a IIa-IIa line in Fig. 2B. In Fig. 2B, dashed lines depict the shape in the plan view of the battery cell 10.

The laminate 1a is formed in the laminate forming step. As illustrated in Figs. 2A and 2B, the laminate 1a according to the present embodiment includes a battery cell 10 having a positive electrode layer 11, a negative electrode layer 12, and a solid electrolyte layer 13 located between the positive electrode layer 11 and the negative electrode layer 12 and includes a positive current collector 14 and a negative current collector 15.

The laminate 1a has parallel main surfaces 16a and 17a opposed to each other across the battery cell 10. The main surface 16a is the uppermost surface of the laminate 1a. The main surface 17a is the lowermost surface of the laminate 1a.

The positive electrode layer 11 is located between the positive current collector 14 and the solid electrolyte layer 13. The positive electrode layer 11 is arranged in contact with the main surface of the positive current collector 14 on the negative electrode layer 12 side. Here, another layer such as a conductive bonding layer may be provided between the positive electrode layer 11 and the positive current collector 14.

The positive electrode layer 11 contains a positive electrode material such, for example, as a positive electrode active material. Various materials capable of releasing and inserting metal ions such as lithium ions or magnesium ions can be used as materials for the positive electrode active material. When a material capable of releasing and inserting lithium ions is used as the positive electrode active material, it is possible to use a positive electrode active material such, for example, as lithium cobalt composite oxide (LCO), lithium nickel composite oxide (LNO), lithium manganese composite oxide (LMO), lithium-manganese-nickel composite oxide (LMNO), lithium-manganese-cobalt composite oxide (LMCO), lithium-nickel-cobalt composite oxide (LNCO), lithium-nickel-manganese-cobalt composite oxide (LNMCO), or lithium-nickel-cobalt-aluminum composite oxide (LNCAO).

As a material contained in the positive electrode layer 11, for example, a solid electrolyte such as an inorganic solid electrolyte may be contained. As the inorganic solid electrolyte, a sulfide solid electrolyte or an oxide solid electrolyte may be used. An example usable as the sulfide solid electrolyte is a mixture of lithium sulfide (Li₂S) and diphosphorus pentasulfide (P₂S₅). In addition, as the sulfide solid electrolyte, it is possible to use a sulfide such as Li₂S-SiS₂, Li₂S-B₂S₃, or Li₂S-GeS₂, or to use a sulfide in which at least one of Li₃N, LiCl, LiBr, Li₃PO₄, and Li₄SiO₄ is added as an additive to the above sulfide.

An example usable as the oxide solid electrolyte is Li₇La₃Zr₂O₁₂ (LLZ), Li_{1.3}Al_{0.3}Ti_{1.7}(PO₄)₃ (LATP), (La,Li)TiO₃ (LLTO), or the like.

The surface of the positive electrode active material may be coated with a solid electrolyte.

As a material contained in the positive electrode layer 11, at least one of conductive materials such, for example, as acetylene black, ketjenblack (registered trademark), and carbon nanofiber, binding binders such, for example, as polyvinylidene fluoride, and the like may be contained.

For example, the positive electrode layer 11 is produced by applying a paste-like paint in which the materials contained in the positive electrode layer 11 are kneaded together with a solvent onto the main surface of the positive current collector 14 and drying the paint. In order to increase the density of the positive electrode layer 11, the positive electrode layer 11 applied on the positive current collector 14 and also called a positive electrode plate may be pressed after drying. The thickness of the positive electrode layer 11 is, for example, greater than or equal to 5 µm and less than or equal to 300 µm, but is not limited to this range.

The negative electrode layer 12 is located between the negative current collector 15 and the solid electrolyte layer 13. The negative electrode layer 12 is arranged in contact with the main surface of the negative current collector 15 on the positive electrode layer 11 side. The negative electrode layer 12 is arranged opposed to the positive electrode layer 11. Here, another layer such as a conductive bonding layer may be provided between the negative electrode layer 12 and the negative current collector 15.

The negative electrode layer 12 contains, for example, a negative electrode active material as an electrode material. Various materials capable of releasing and inserting ions such as lithium ions or magnesium ions can be used as materials for the negative electrode active material. When a material capable of releasing and inserting lithium ions is used as a negative electrode active material contained in the negative electrode layer 12, it is possible to use a negative electrode active material such, for example, as a single material such as graphite, metallic lithium, or silicon, a mixture of them, or lithium-titanium oxide (LTO).

As a material contained in the negative electrode layer 12, for example, a solid electrolyte such as an inorganic solid electrolyte may be contained. As the inorganic solid electrolyte, for example, the inorganic solid electrolytes listed as the examples of the material contained in the positive electrode layer 11 may be used.

As a material contained in the negative electrode layer 12, at least one of conductive materials such, for example, as acetylene black, ketjenblack, and carbon nanofiber, binding binders such, for example, as polyvinylidene fluoride, and the like may be contained.

For example, the negative electrode layer 12 is produced by applying a paste-like paint in which the materials contained in the negative electrode layer 12 are kneaded together with a solvent onto the main surface of the negative current collector 15 and drying the paint. In order to increase the density of the negative electrode layers 12, the negative electrode layers 12 applied on the negative current collector 15 and also called a negative electrode plate may be pressed after drying. The thickness of the negative electrode layer 12 is, for example, greater than or equal to 5 µm and less than or equal to 300 µm, but is not limited to this range.

The positive electrode layer 11 is in contact with the main surface of the positive current collector 14. The positive current collector 14 may include a current collector layer that is a layer containing a conductive material and provided on a portion to be in contact with the positive electrode layer 11. The negative electrode layer 12 is in contact with the main surface of the negative current collector 15. The negative current collector 15 may include a current collector layer that is a layer containing a conductive material and provided on a portion to be in contact with the negative electrode layer 12.

Each of the positive current collector 14 and the negative current collector 15 is a conductive member in the form of a foil, a plate, or a mesh. Each of the positive current collector 14 and the negative current collector 15 may be, for example, a conductive thin film. As a material for constituting the positive current collector 14 and the negative current collector 15, a metal such, for example, as stainless steel (SUS), aluminum (Al), copper (Cu), or nickel (Ni) may be used. The positive current collector 14 and the negative current collector 15 may be formed by using different materials.

The thickness of each of the positive current collector 14 and the negative current collector 15 is, for example, greater than or equal to 5 µm and less than or equal to 100 µm, but is not limited to this range.

The solid electrolyte layer 13 is located between the positive electrode layer 11 and the negative electrode layer 12. The solid electrolyte layer 13 is in contact with both the positive electrode layer 11 and the negative electrode layer 12. The solid electrolyte layer 13 is a layer containing an electrolyte material. As the electrolyte material, generally known electrolytes for battery may be used. The thickness of the solid electrolyte layer 13 may be greater than or equal to 5 µm and less than or equal to 300 µm or may be greater than or equal to 5 µm and less than or equal to 100 µm.

The solid electrolyte layer 13 contains a solid electrolyte. As the solid electrolyte, a solid electrolyte such, for example, as an inorganic solid electrolyte may be used. As the inorganic solid electrolyte, the inorganic solid electrolytes listed as the examples of the material contained in the positive electrode layer 11 may be used.

The solid electrolyte layer 13 may contain a binding binder such, for example, as polyvinylidene fluoride or the like in addition to the electrolyte material.

For example, the solid electrolyte layer 13 is produced by applying a paste-like paint in which the materials contained in the solid electrolyte layer 13 are kneaded together with a solvent onto the main surfaces of the positive electrode layer 11 and/or the negative electrode layer 12 and drying the paint. Instead, the solid electrolyte layer 13 may be formed by applying the paste-like paint onto a release film and drying the paste.

For example, the laminate 1a is manufactured by laminating the positive current collector 14, the positive electrode layer 11, the solid electrolyte layer 13, the negative electrode layer 12, and the negative current collector 15 in this order and pressure-bonding them. As the pressurizing method, for example, a plate press, a roll press, or an isostatic press may be used. Moreover, from the viewpoint of improvement of the adhesion and density of each layer, heating may be performed during pressurization. The heating temperature may be set within a range where the materials of all the layers will not undergo a chemical change due to heat, and is, for example, higher than or equal to 60°C and lower than or equal to 200°C.

In the present embodiment, the positive electrode layer 11, the negative electrode layer 12, and the solid electrolyte layer 13 are maintained in the forms of parallel flat plates. This makes it possible to inhibit the occurrence of a crack or collapse due to bending. Instead, the positive electrode layer 11, the negative electrode layer 12, and the solid electrolyte layer 13 may be smoothly curved all together.

The battery cell 10 is structured such that the side surfaces of the positive electrode layer 11, the negative electrode layer 12, and the solid electrolyte layer 13 are provided flush with each other, but is not limited to this. For example, in the plan view, the side surfaces of the positive electrode layer 11, the negative electrode layer 12, and the solid electrolyte layer 13 may be located at different positions. Instead, for example, the battery cell 10 may be structured such that the side surface of at least one of the positive electrode layer 11 and the negative electrode layer 12 is covered with the solid electrolyte layer 13 and the solid electrolyte layer 13 is in contact with at least one of the positive current collector 14 and the negative current collector 15.

In the laminate 1a, for example, the main surface of the positive current collector 14 on the battery cell 10 side includes a portion not provided with the positive electrode layer 11. In addition, in the laminate 1a, for example, the main surface of the negative current collector 15 on the battery cell 10 side includes a portion not provided with the negative electrode layer 12. Although the regions on the current collectors incapable of functioning as a battery due to the absence of the positive electrode layer 11 and the negative electrode layer 12 are present in the laminate 1a, the capacity density of the battery 1 can be enhanced by cutting off the edge portions of the laminate 1a as will be described later. Here, the solid electrolyte layer 13 may be in contact with at least one of the portion of the positive current collector 14 not provided with the positive electrode layer 11 and the portion of the negative current collector 15 not provided with the negative electrode layer 12.

Next, the first cutting step and the second cutting step will be described.

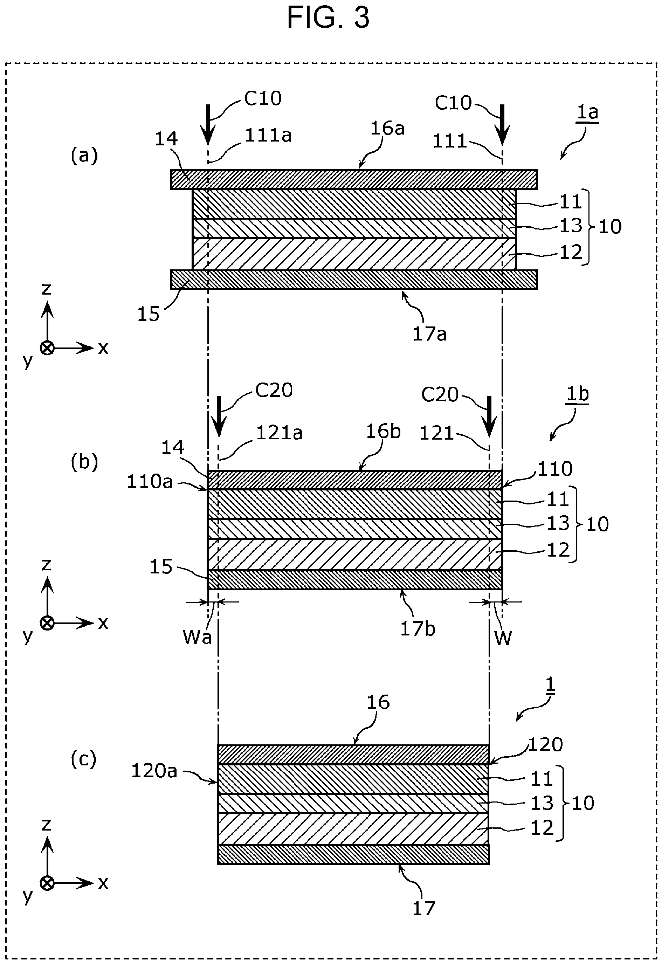

Fig. 3 is a sectional view for explaining a method of manufacturing the battery 1 according to the present embodiment.

In the first cutting step, as illustrated in Fig. 3(a), the laminate 1a formed in the laminate forming step is cut at first cutting positions 111 and 111a depicted with dashed lines in the drawing, thereby forming first cut surfaces 110 and 110a. As a result, a laminate 1b illustrated in Fig. 3(b) is formed. The first cut surfaces 110 and 110a are side surfaces connecting a main surface 16b and a main surface 17b in the laminate 1b.

In the first cutting step, for example, the laminate 1a is cut at the first cutting position 111 passing the positive electrode layer 11, the negative electrode layer 12, and the solid electrolyte layer 13 in the battery cell 10. Specifically, in the first cutting step, as illustrated in Figs. 3(a) and 3(b), the planar first cut surface 110 is formed by collectively cutting all the constituent elements of the laminate 1a, namely, the positive electrode layer 11, the negative electrode layer 12, the solid electrolyte layer 13, the positive current collector 14, and the negative current collector 15. The first cutting position 111 is a position passing the two main surfaces 16a and 17a of the laminate 1a. The direction in which the first cut surface 110 extends is not particularly limited. For example, the first cut surface 110 may be orthogonal to the main surfaces 16a and 17a.

The first cutting position 111 is not particularly limited. The first cutting position 111 may be a position for cutting off an edge portion of the laminate 1a or a position for dividing the laminate 1a into multiple laminates.

An example of a usable cutting method in the first cutting step is, but is not limited to, shearing with a blade, cutting with an end mill, grinding, laser cutting, jet cutting, or the like. From the viewpoint of improvement of the productivity and the effective volume, the cutting method in the first cutting step may be a shearing process of shearing with a blade or the like.

In the first cutting step, for example, when the position of the laminate 1a is used as a reference, the cutting proceeds at the first cutting position 111 along a first direction C10 that is a fixed direction. In the case of the shearing process using a blade, for example, the direction in which the cutting proceeds is a direction in which the blade moves relative to the laminate 1a in the plan view of the first cut surface 110 to be formed. The first direction C10 is, for example, a direction orthogonal to the main surfaces 16a and 17a in the plan view of the first cut surface 110, in other words, a direction parallel to the laminating direction of the laminate 1a. Thus, it is possible to cut the laminate 1a along the direction connecting the main surface 16a and the main surface 17a at the shortest distance, thereby improving the productivity of the battery 1. The first direction C10 is not particularly limited, and may be a direction crossing the direction orthogonal to the main surfaces 16a and 17a.

Next, in the second cutting step, as illustrated in Fig. 3(b), the laminate 1b formed in the first cutting step is cut at second cutting positions 121 and 121a depicted with dashed lines in the drawing, thereby forming second cut surfaces 120 and 120a. The second cutting positions 121 and 121a are located inside the first cut surfaces 110 and 110a and at distances W and Wa from the first cut surfaces 110 and 110a, respectively. As a result, the battery 1 illustrated in Fig. 3(c) is formed.

In the second cutting step, as illustrated in Figs. 3(b) and 3(c), the planar second cut surface 120 is formed by cutting the laminate 1b at the second cutting position 121 located at the distance W inside from the first cut surface 110. The distance W is a distance between the first cut surface 110 and the second cut surface 120 to be formed. Since the second cut surface 120 is formed at the second cutting position 121, the distance W may be rephrased as a distance between the first cut surface 110 and the second cutting position 121. The second cutting position 121 is a position not passing the first cut surface 110. The first cut surface 110 and the second cut surface 120 (in other words, the second cutting position 121) may be parallel to each other. In this case, since the distance between the first cut surface 110 and the second cutting position 121 is constant, the quality of the second cut surface can be stabilized and the volume cut off in the second cutting step can be reduced.

In the second cutting step, for example, the second cut surface 120 is formed by collectively cutting all the constituent elements of the laminate 1b, namely, the positive electrode layer 11, the negative electrode layer 12, the solid electrolyte layer 13, the positive current collector 14, and the negative current collector 15 as in the first cutting step. The second cutting position 121 is a position passing the two main surfaces 16b and 17b of the laminate 1b.

The second cutting position 121 is close to the first cut surface 110. In the second cutting step, a relationship between the surface roughness Rz₁ of the first cut surface 110 and the distance W satisfies Rz₁ < W < 5Rz₁. For example, in the second cutting step, the laminate 1b is cut with the second cutting position 121 set to a position located at the distance W having the above relationship inside from the upper end side of the first cut surface 110. When the distance W is less than or equal to the surface roughness Rz₁ of the first cut surface 110, there is a risk that burrs and the like present on the surface of the first cut surface 110 cannot be fully removed. When the distance W is greater than or equal to five times the surface roughness Rz₁ of the first cut surface 110, it is difficult to make the surface roughness Rz₂ of the second cut surface 120 small and obtain the effects of the present disclosure. The relationship between the surface roughness Rz₁ of the first cut surface 110 and the distance W satisfies Rz₁ < W < 5Rz₁, for example, at any position. In the present description, the surface roughness such as the surface roughness Rz₁ is a maximum surface roughness measured by a method in conformity to JIS B0601 2013.

In addition, the relationship between the surface roughness Rz₁ of the first cut surface 110 and the distance W may satisfy Rz₁ < W < 4Rz₁ from the viewpoint of improvement of the flatness of the second cut surface.

Moreover, the distance W between the first cut surface 110 and the second cutting position 121 may be less than or equal to three times or two times the thickness of the laminate 1b. This makes it possible to more effectively make the surface roughness Rz₂ of the second cut surface 120 small.

Further, for example, the second cut surface 120 is orthogonal to the main surfaces 16b and 17b of the laminate 1b. In this case, the positions of the end surfaces of the respective layers of the battery 1 exposed at the second cut surface 120 are aligned when viewed from the laminating direction, so that the effective volume of the battery can be increased. For example, in the second cut surface 120, the side surfaces of the positive electrode layer 11, the negative electrode layer 12, the solid electrolyte layer 13, the positive current collector 14, and the negative current collector 15 of the battery 1 are exposed to be flush with each other. Moreover, for example, when viewed from the laminating direction of the battery 1, the positions of the side surfaces of the positive electrode layer 11, the negative electrode layer 12, the solid electrolyte layer 13, the positive current collector 14, and the negative current collector 15 coincide with each other in the second cut surface 120.

An example of a usable cutting method in the second cutting step is, but is not limited to, shearing with a blade, cutting with an end mill, grinding, laser cutting, jet cutting, or the like. From the viewpoint of improvement of the productivity and the effective volume, the cutting method in the second cutting step may be the shearing process of shearing with a blade or the like. In the shearing process, the temperature of the laminate 1b hardly rises during cutting and accordingly the battery cell 10 rarely deteriorates during cutting. Moreover, from the viewpoint that the flatness of the second cut surface 120 can be improved, the shearing process may be cutting with an ultrasonic cutter that cuts by transmitting high-frequency vibration to the cutting edge.

In the second cutting step, for example, when the position of the laminate 1b is used as a reference, the cutting proceeds at the second cutting position 121 along a second direction C20 that is a fixed direction. In the case of the shearing process using a blade, for example, the direction in which the cutting proceeds is a direction in which the blade moves relative to the laminate 1b in the plan view of the second cut surface 120 to be formed as in the first direction C10. For example, the second direction C20 is a direction orthogonal to the main surfaces 16b and 17b in the plan view of the second cut surface 120. Thus, the second direction C20 is parallel to and the same as the first direction C10. As a result, it is possible to cut the laminate 1b along the direction connecting the main surface 16b and the main surface 17b at the shortest distance, thereby improving the productivity of the battery 1. In the case of a comparison of a relationship between the first direction C10 and the second direction C20, the comparison is made on the assumption that the first cutting position 111 and the second cutting position 121 are parallel to each other even when the first cutting position 111 and the second cutting position 121 are not parallel to each other.

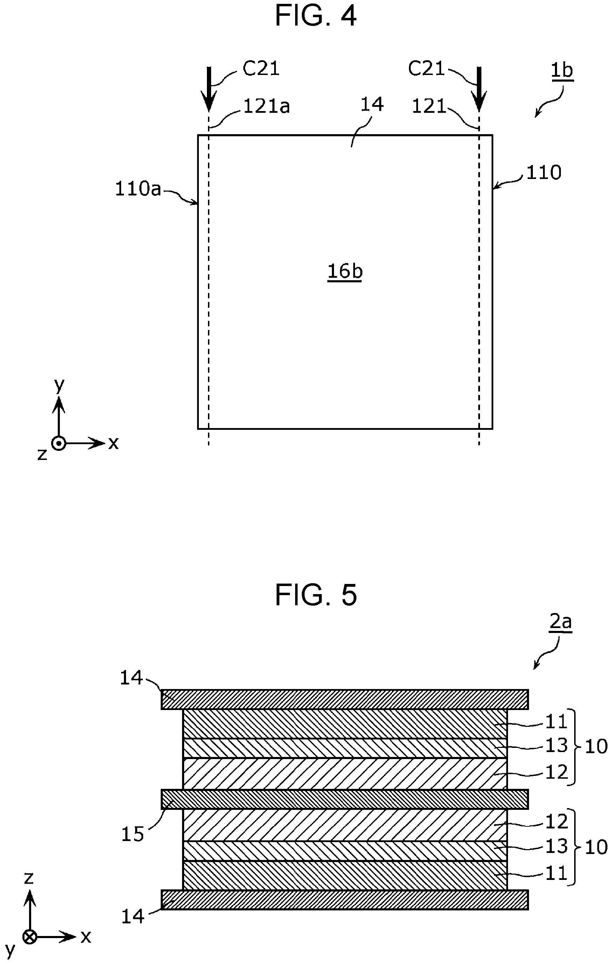

The second direction C20 is not particularly limited, and the positional relationship between the first direction C10 and the second direction C20 is not limited to being parallel. Fig. 4 is a top view for explaining another example of the second direction in the second cutting step. As illustrated in Fig. 4, the first direction C10 and a second direction C21 are not parallel but are different directions. Specifically, the second direction C21 is a direction perpendicular to the first direction C10, and is a direction perpendicular to the laminating direction of the laminate 1b (for example, a longitudinal direction of the first cut surface 110). With the first direction C10 and the second direction C21 as described above, the first cutting position 111 in the first cutting step is easily set at a certain position of the laminate 1a. In addition, the direction in which the cutting proceeds in the second cutting step is orthogonal to the laminating direction of the laminate 1b. For this reason, even if burrs and the like are generated by cutting, the burrs and the like are formed so as to extend orthogonally to the laminating direction. As a result, the occurrence of a short circuit between the layers of the laminate 1b can be inhibited and the reliability of the battery 1 can be improved. The case where the first direction C10 and the second direction C21 are different directions is not limited to the aforementioned example. With the first direction C10 and the second direction C21 different from each other, the laminate 1a and the laminate 1b can be cut in directions adjusted depending on the quality of the cut surface, the ease of cutting, and the like in the first cutting step and the second cutting step.

The surface roughness Rz₂ of the second cut surface 120 may be, for example, greater than 0 and less than or equal to the thickness of the solid electrolyte layer 13. When the surface roughness Rz₂ of the second cut surface 120 is less than or equal to the thickness of the solid electrolyte layer 13, the occurrence of a short circuit can be effectively inhibited. This is because, even if a protrusion is formed on one of the positive electrode layer 11 and the negative electrode layer 12 on the second cut surface 120, the protrusion does not reach the other electrode layer when deformation or the like occurs. In addition, the surface roughness Rz₂ of the second cut surface 120 may be less than the thickness of the solid electrolyte layer 13.

The surface roughness Rz₂ of the second cut surface 120 may be less than or equal to 30 µm or be less than or equal to 20 µm. Moreover, the second cut surface 120 may be flat. In this case, the reliability of the battery 1 can be enhanced. In the present description, to be flat means to be substantially flat and means that the surface roughness Rz₂ is, for example, less than or equal to 10 µm.

Moreover, the first cutting step and the second cutting step may be performed continuously as a series of steps. This enhances the productivity. To perform continuously as a series of steps herein means to perform the first cutting step and the second cutting step without inserting execution of another step such as processing or measurement of the laminate 1a between the first cutting step and the second cutting step. For example, the laminate 1a may be fixed for cutting in the first cutting step, and then the second cutting step may be performed while the resultant laminate is kept fixed after the cutting of the laminate 1a. In addition, the first cutting step and the second cutting step may be performed with cutting devices on a continuous manufacturing line. The second cutting step may be performed within one minute after the end of the first cutting step.

Through the steps as described above, the battery 1 having the second cut surfaces 120 and 120a as illustrated in Fig. 3(c) is manufactured.

In the above description, the formation of the first cut surface 110 and the second cut surfaces 120 has been mainly described. Since the same applies to the first cut surface 110a and the second cut surface 120a, the detailed description thereof is omitted herein. Then, in the present embodiment, both the number of the first cut surfaces and the number of the second cut surfaces are two, but are not limited to two and each may be at least equal to or larger than one. In other words, at least one of the side surfaces of the battery 1 according to the present embodiment only has to be the second cut surface. All the side surfaces of the battery 1 may be the second cut surfaces from the viewpoint of further improvement of the capacity density and the reliability.

According to the method of manufacturing the battery 1 according to the present embodiment, the first cutting step of forming the first cut surface 110 and the second cutting step of forming the second cut surface 120 at the second cutting position 121 close to the first cut surface 110 are performed. This enables removal of the portions of the battery 1 not contributing to power generation and the like, and accordingly an increase in the ratio of the effective volume, which is a volume contributing to power generation, to the battery 1. Moreover, with the relationship between the surface roughness Rz₁ of the first cut surface 110 and the distance W satisfying Rz₁ < W < 5Rz₁ in the second cutting step, the portion near the first cut surface 110 susceptible to formation of burrs and rollover formed in the first cutting step is cut off, so that the battery 1 having the second cut surface 120 that has few burrs and rollover and is flatter than the first cut surface 110 can be manufactured. As a result, the high capacity density and high reliability of the battery 1 can be both achieved.

### (Embodiment 2)

Next, a method for manufacturing a battery according to Embodiment 2 will be described. Embodiment 2 is different from Embodiment 1 in the number of battery cells included in a laminate. In the following description, different points will be described, and the description of the common points will be omitted or simplified.

Fig. 5 is a sectional view illustrating a sectional structure of a laminate 2a according to the present embodiment. In the present embodiment, the laminate 2a is formed in the laminate forming step and the laminate 2a is cut in the first cutting step. As illustrated in Fig. 5, the laminate 2a includes multiple battery cells 10, a positive current collector 14, and a negative current collector 15. The multiple battery cells 10 are laminated such that the neighboring battery cells 10 are electrically connected to each other via the current collector. In the laminate 2a, negative electrode layers 12 are arranged on the upper and lower main surfaces of the negative current collector 15. In other words, the multiple battery cells 10 are laminated to be electrically connected in parallel by electrically connecting the same-polarity electrodes of the neighboring battery cells 10 via the current collector. Therefore, the laminating order is reversed between the neighboring battery cells 10. Each battery cell 10 is sandwiched between the positive current collector 14 and the negative current collector 15 without another battery cell 10 interposed.

The negative electrode layers 12 are produced by applying a paste-like paint in which the materials contained in the negative electrode layers 12 are kneaded together with a solvent onto both main surfaces of the negative current collector 15 and drying the paint. In order to increase the density of the negative electrode layers 12, the negative electrode layers 12 applied on the negative current collector 15 and also called negative electrode plates may be pressed after drying.

The solid electrolyte layers 13 and the positive electrode layers 11 are manufactured in the same methods as in Embodiment 1. Then, the laminate 2a is pressurebonded in the same method as in Embodiment 1.

The laminate 2a may have a structure in which the positions of the negative electrode layers 12 and the positive electrode layers 11 are exchanged. The number of battery cells 10 in the laminate 2a is two, but may be equal to or larger than three. For example, the number of multiple battery cells 10 can be increased by laminating the battery cells 10 with the positive electrode layers 11 arranged also on both surfaces of the positive current collector 14. Moreover, in the laminate 2a, the multiple battery cells 10 may be laminated to be electrically connected in series by electrically connecting the opposite-polarity electrodes of the neighboring battery cells 10 via the current collector. In this case, the positive electrode layer 11 is arranged on one of the main surfaces of at least one positive current collector 14 or negative current collector 15 and the negative electrode layer 12 is arranged on the other main surface.

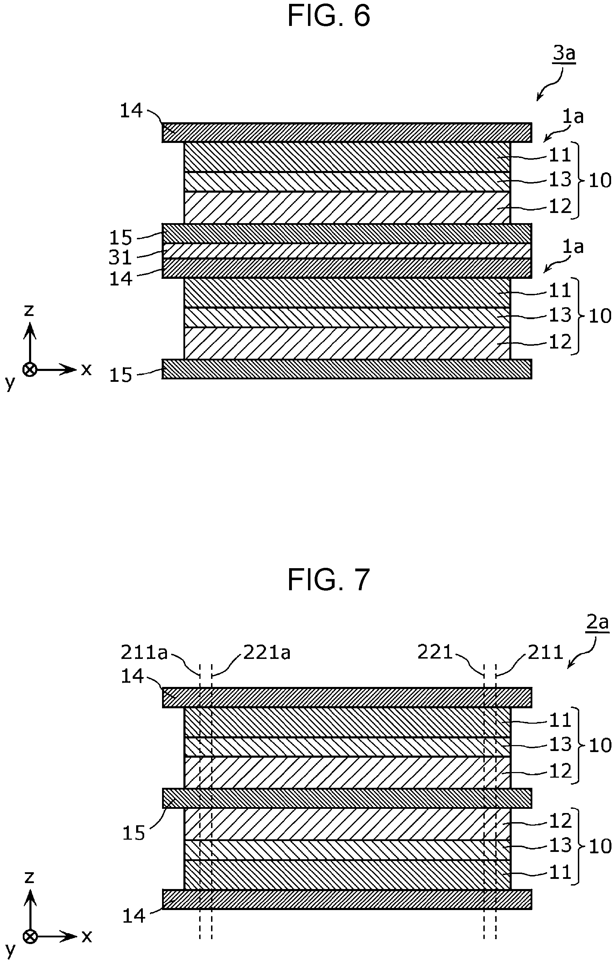

In addition, in the case where the multiple battery cells 10 are laminated, the battery cells 10 may be laminated with a conductive layer interposed in between. Fig. 6 is a sectional view illustrating a sectional structure of a laminate 3a according to the present embodiment. In the present embodiment, the laminate 3a may be cut in the first cutting step.

As illustrated in Fig. 6, the laminate 3a includes multiple laminates 1a each having a battery cell 10 and a conductive layer 31. The multiple laminates 1a are laminated such that the neighboring laminates 1a are electrically connected to each other via the conductive layer 31. In other words, the conductive layer 31 is located between the neighboring laminates 1a among the multiple laminates 1a. In the laminate 3a, the positive current collector 14 is arranged on one of the main surfaces of the conductive layer 31 and the negative current collector 15 is arranged on the other main surface. More specifically, in the laminate 3a, the multiple battery cells 10 are laminated to be electrically connected in series by electrically connecting the opposite-polarity electrodes of the neighboring battery cells 10 via the positive current collector 14, the negative current collector 15, and the conductive layer 31. Therefore, the multiple laminates 1a have the same laminating order.

A material for the conductive layer 31 is not particularly limited and, for example, a conductive adhesive agent having an electric conductivity and adhesiveness may be used. An example usable as the conductive adhesive agent is a mixture of metal particles and resin, a conductive polymer, or a metal with a low melting point. Instead, the laminate 3a does not have to include the conductive layer 31, and the positive current collector 14 and the negative current collector 15 may be directly joined between the neighboring laminates 1a.

For example, the laminate 3a is produced by applying a conductive adhesive agent as a material for the conductive layer 31 onto the positive current collector 14 or the negative current collector 15 of the laminate 1a formed in the above method and joining the two laminates 1a via the conductive adhesive agent.

The number of the multiple laminates 1a in the laminate 3a is two, but may be equal to or larger than three. The number of the multiple laminates 1a in the laminate 3a can be adjusted by increasing the number of the laminates 1a and the conductive layers 31 joined. Instead, in the laminate 3a, the multiple battery cells 10 may be laminated to be electrically connected in parallel by electrically connecting the same-polarity electrodes of the neighboring battery cells 10 via the positive current collector 14 or the negative current collector 15 and the conductive layer 31.

A laminate-type battery having a structure in which multiple battery cells 10 are laminated can be manufactured by performing the first cutting step and the second cutting step using the laminate 2a or the laminate 3a thus produced.

Fig. 7 is a sectional view for explaining a method for manufacturing a battery according to the present embodiment. As illustrated in Fig. 7, in the first cutting step, the laminate 2a is cut at first cutting positions 211 and 211a depicted with dashed lines in the drawing, thereby forming the first cut surfaces. Next, in the second cutting step, the cut laminate 2a is further cut at second cutting positions 221 and 221a located inside the first cut surfaces and depicted with dashed lines in the drawing, thereby forming the second cut surfaces. In this case, all the multiple battery cells 10 included in the laminate 2a are collectively cut in the first cutting step and the second cutting step, the details of the first cutting step and the second cutting step are as described in Embodiment 1. When a battery is manufactured through the same first cutting step and second cutting step as described above, the laminate-type battery thus manufactured can achieve both high capacity density and high reliability. Also, in the case of using the laminate 3a, the laminate-type battery thus manufactured can achieve both high capacity density and high reliability as well.

### (Examples)

Hereinafter, the details of the present disclosure will be specifically described based on Examples. However, the present disclosure should not be limited at all to Examples described below.

### [Production of Laminates for Evaluation]

A positive electrode plate having a positive electrode layer was produced by mixing a lithium cobaltate powder as a positive electrode active material, a mixture of lithium sulfide and diphosphorus pentasulfide as a solid electrolyte, and a xylene solvent to form a slurry, applying the slurry onto an aluminum foil having a thickness of 12 µm as a positive current collector, and drying the slurry.

In addition, a negative electrode plate having a negative electrode layer was produced by mixing a graphite powder as a negative electrode active material and the same solid electrolyte and xylene solvent as the above to form a slurry, applying the slurry to a stainless steel foil having a thickness of 15 µm as a negative current collector, and drying the slurry.

Next, a solid electrolyte layer was produced by mixing the same solid electrolyte and xylene solvent as the above to form a slurry, applying the slurry onto the negative electrode layer, and drying the slurry. Then, the positive electrode plate and the negative electrode plate were laminated with the solid electrolyte layer on the negative electrode layer interposed in between and were pressurized under the condition with heating at 120°C, thereby producing a laminate. The thickness of the laminate at this time was 150 µm. The thickness of the solid electrolyte layer was 30 µm.

The produced laminate was cut with a shear to form a first cut surface. The surface roughness Rz₁ of the first cut surface was measured by using a laser microscope (manufactured by Keyence Corporation). The surface roughness Rz₁ of the first cut surface thus formed was 84 µm.

Further, the laminate with the first cut surface formed was divided into 15 pieces by cutting in a direction orthogonal to the first cut surface, and thus 15 laminates for evaluation in about 15 mm squares each having the divided first cut surface were obtained.

### [Example 1]

Next, the laminate for evaluation was cut by using an ultrasonic cutter at a second cutting position 100 µm inside from the first cut surface to form a second cut surface, and thereby a battery with the second cut surface formed was obtained. In other words, the aforementioned second cutting step was performed under the condition where the distance W between the first cut surface and the second cut surface to be formed was 100 µm. The same operation was repeated three times by using different laminates for evaluation to produce three batteries.

The surface roughness Rz₂ of the second cut surface of each of the produced batteries was measured by using a laser microscope (manufactured by Keyence Corporation). In addition, whether a short circuit occurred in each of the produced batteries was evaluated by measuring a potential difference between the positive electrode layer and the negative electrode layer in the battery with a tester. Table 1 presents the measurement result of the surface roughness Rz₂ of the second cut surface and the short circuit evaluation result. In Table 1, the surface roughness Rz₂ of the second cut surface is an average value of the three batteries. In Table 1, a short circuit count is the number of batteries in which short circuits were observed among the three batteries. Table 1 also presents the surface roughness Rz₁ of the first cut surface, the distance W, W/Rzi, and W/T where T denotes the thickness of the laminate for evaluation.

As presented in Table 1, in the batteries in Example 1, the surface roughness Rz₂ of the second cut surface was 9 µm and the short circuit count was 0.

### [Example 2]

Batteries were produced in the same method as in Example 1 except that the distance W was changed to 200 µm. In addition, the measurement of the surface roughness Rz₂ of the second cut surface and the short circuit evaluation for the batteries produced were made in the same method as in Example 1. Table 1 presents the measurement result of the surface roughness Rz₂ of the second cut surface and the short circuit evaluation result. As presented in Table 1, in the batteries in Example 2, the surface roughness Rz₂ of the second cut surface was 6 µm and the short circuit count was 0.

### [Example 3]

Batteries were produced in the same method as in Example 1 except that the distance W was changed to 300 µm. In addition, the measurement of the surface roughness Rz₂ of the second cut surface and the short circuit evaluation for the batteries produced were made in the same method as in Example 1. Table 1 presents the measurement result of the surface roughness Rz₂ of the second cut surface and the short circuit evaluation result. As presented in Table 1, in the batteries in Example 3, the surface roughness Rz₂ of the second cut surface was 10 µm and the short circuit count was 0.

### [Example 4]

Batteries were produced in the same method as in Example 1 except that the distance W was changed to 400 µm. In addition, the measurement of the surface roughness Rz₂ of the second cut surface and the short circuit evaluation for the batteries produced were made in the same method as in Example 1. Table 1 presents the measurement result of the surface roughness Rz₂ of the second cut surface and the short circuit evaluation result. As presented in Table 1, in the batteries in Example 4, the surface roughness Rz₂ of the second cut surface was 18 µm and the short circuit count was 0.

### [Comparative Example 1]

Batteries were produced in the same method as in Example 1 except that the distance W was changed to 500 µm. In addition, the measurement of the surface roughness Rz₂ of the second cut surface and the short circuit evaluation for the batteries produced were made in the same method as in Example 1. Table 1 presents the measurement result of the surface roughness Rz₂ of the second cut surface and the short circuit evaluation result. As presented in Table 1, in the batteries in Comparative Example 1, the surface roughness Rz₂ of the second cut surface was 55 µm and the short circuit count was 2.

**[Table 1]**

| | Rz₁ (µm) | W (µm) | W/Rz₁ | W/T | Rz₂ (µm) | Short Circuit Count (N = 3) |
|---|---|---|---|---|---|---|
| Example 1 | 84 | 100 | 1.19 | 0.67 | 9 | 0 |
| Example 2 | 84 | 200 | 2.38 | 1.33 | 6 | 0 |
| Example 3 | 84 | 300 | 3.57 | 2.00 | 10 | 0 |
| Example 4 | 84 | 400 | 4.76 | 2.67 | 18 | 0 |
| Comp. Ex. 1 | 84 | 500 | 5.95 | 3.33 | 55 | 2 |

### [Summary]

As presented above, it was found that the batteries in Examples 1 to 4 in which the second cut surfaces were formed under the condition satisfying W/Rz₁ greater than 1 and less than 5, that is, Rz₁ < W < 5Rz₁ had the small surface roughness Rz₂ of the second cut surface of less than or equal to the thickness of the solid electrolyte layer and did not cause a short circuit, and thus had an ability to achieve high reliability. In this case, the distance W is less than or equal to three times the thickness T of the laminate for evaluation.

In addition, it was found that the batteries in Examples 1 to 3 in which the second cut surfaces were formed under the condition satisfying W/Rzi greater than 1 and less than 4, that is, Rz₁ < W < 4Rz₁ had the surface roughness Rz₂ of the second cut surface of less than or equal to 10 µm and thus had an ability to achieve especially high reliability because the substantially flat second cut surfaces were formed. In this case, the distance W is less than or equal to two times the thickness T of the laminate for evaluation.

In contrast, in the batteries in Comparative Example 1 in which the second cut surfaces were formed under the condition having W/Rzi of greater than or equal to 5, that is, not satisfying Rz₁ < W < 5Rz₁, the surface roughness Rz₂ of the second cut surface was greater than in the batteries in Examples 1 to 4, and the short circuits occurred. Thus, it was found that the production condition of the batteries in Comparative Example 1 led to decreased reliability of the batteries as compared with Examples 1 to 4. As described above, it was confirmed that the reliability of the batteries may not be enhanced only by simply cutting the laminates for evaluation two times, but the reliability of the batteries can be enhanced by performing the second cutting under the condition satisfying Rz₁ < W < 5Rz₁.

### (Other Embodiments)

Although the battery and method for manufacturing a battery according to the present disclosure have been described heretofore based on Embodiments and Examples, the present disclosure should not be limited to these Embodiments and Examples. The scope of the present disclosure includes various modifications of the embodiments conceivable by those skilled in the art and other modes constructed by combining some of the constituent elements in the embodiments, without departing from the gist of the present disclosure.

Further, in the foregoing embodiments, various changes, replacements, additions, omissions, or the like can be made within the scope of claims or the scope of the equivalents thereof.

### Industrial Applicability

Batteries according to the present disclosure are usable, for example, as batteries for electronic devices, electric appliance devices, electric vehicles, and the like.

### Reference Sings List

1 battery
1a, 1b, 2a, 3a laminate
10 battery cell
11 positive electrode layer
12 negative electrode layer
13 solid electrolyte layer
14 positive current collector
15 negative current collector
16, 16a, 16b, 17, 17a, 17b main surface
110, 110a first cut surface
111, 111a, 211, 211a first cutting position
120, 120a second cut surface
121, 121a, 221, 221a second cutting position
31 conductive layer
C10 first direction
C20, C21 second direction
W, Wa distance

## Claims

1. A method for manufacturing a battery comprising:
a first cutting step of cutting a laminate at a first cutting position to form a first cut surface, the laminate including at least one battery cell having a positive electrode layer, a negative electrode layer, and a solid electrolyte layer located between the positive electrode layer and the negative electrode layer; and
a second cutting step of cutting the laminate cut in the first cutting step at a second cutting position inside the first cutting position to form a second cut surface, wherein
Rz₁ < W < 5Rz₁ is satisfied in the second cutting step,
where W denotes a distance between the first cut surface and the second cut surface to be formed and Rz₁ denotes a surface roughness of the first cut surface.

2. The method for manufacturing a battery according to claim 1, wherein the W is less than or equal to three times a thickness of the laminate.

3. The method for manufacturing a battery according to claim 1 or 2, wherein the first cutting step and the second cutting step are performed continuously as a series of steps.

4. The method for manufacturing a battery according to any one of claims 1 to 3, wherein when a position of the laminate is set as a reference, a first direction in which cutting of the laminate at the first cutting position proceeds is different from a second direction in which cutting of the laminate at the second cutting position proceeds.

5. The method for manufacturing a battery according to claim 4, wherein the second direction is a direction perpendicular to the first direction.

6. The method for manufacturing a battery according to claim 4 or 5, wherein the second direction is a direction perpendicular to a laminating direction of the laminate.

7. The method for manufacturing a battery according to any one of claims 1 to 6, wherein
the at least one battery cell includes a plurality of battery cells, and
the plurality of battery cells are laminated.

8. The method for manufacturing a battery according to any one of claims 1 to 7, wherein the laminate is cut by a shearing process in each of the first cutting step and the second cutting step.

9. The method for manufacturing a battery according to any one of claims 1 to 8, wherein the laminate is cut with an ultrasonic cutter in the second cutting step.

10. The method for manufacturing a battery according to any one of claims 1 to 9, wherein a surface roughness of the second cut surface is less than or equal to a thickness of the solid electrolyte layer.

11. The method for manufacturing a battery according to any one of claims 1 to 10, wherein the second cut surface is flat.
